# EUROPÄISCHE PATENTSCHRIFT

(11) **EP 1 537 332 B1**
(45) Veröffentlichungstag und Bekanntmachung des Hinweises auf die Patenterteilung: **13.07.2011**
(21) Anmeldenummer: 03798133.9
(22) Anmeldetag: 27.08.2003
(51) Int. Cl.: F04B 1/04, F04B 1/053, F16C 21/00, F16C 19/54

(54) **MOTOR-PUMPEN-AGGREGAT, INSBESONDERE FÜR SCHLUPFGEREGELTE FAHRZEUGBREMSSYSTEME**
MOTOR/PUMP UNIT, PARTICULARLY FOR ANTI-SKID VEHICLE BRAKE SYSTEMS
GROUPE MOTOPOMPE, NOTAMMENT POUR SYSTEME DE FREINAGE DE VEHICULES, A REGULATION ANTIPATINAGE

(30) Priorität: 04.09.2002 DE 10241306
(43) Veröffentlichungstag der Anmeldung: 08.06.2005
(73) Patentinhaber: Continental Teves AG & Co. oHG, 60488 Frankfurt (DE)
(72) Erfinder: DINKEL, Dieter, 65824 Schwalbach (DE)
(86) Internationale Anmeldenummer: PCT/EP2003/009480
(87) Internationale Veröffentlichungsnummer: WO 2004/029453

(56) Entgegenhaltungen:
- DE-A- 2 205 363
- DE-A- 19 636 508
- DE-A- 19 704 752
- DE-A- 19 839 430
- FR-A- 2 256 689

## Beschreibung

Die Erfindung betrifft ein Motor-Pumpen-Aggregat, insbesondere für schlupfgeregelte Fahrzeugbremssysteme, mit den Merkmalen des Oberbegriffs von Patentanspruch 1.

Aus der DE 196 36 508.2 ist eine Radialkolbenpumpe mit Arbeitskolben bekannt, wobei die Arbeitskolben in einem Zylinderblock angeordnet sind und mittels einer in einen Kurbelraum des Zylinderblocks ragenden Antriebswelle angetrieben werden, auf deren Exzenterabschnitt ein Radiallager angeordnet ist, durch dessen Lagerschale ein radial nach innen aus dem Zylinderblock ragendes Kolbenende beaufschlagbar ist, und wobei die Lagerschale auf der dem Ende des Exzenterabschnitts zugeordneten Seite in Form einer Bodenwand geschlossen ist.

Die Lagerschale kann in Abhängigkeit von den herrschenden Reibungsverhältnissen eine rotatorische Relativbewegung zu der Antriebswelle ausführen. Darüber hinaus kann die Lagerschale zur axialen Abstützung der Antriebswelle an einem Kurbelraumboden anlaufen. Weil jeder Anlaufvorgang zu Reibung und Verschleiß zwischen Lagerring und Kurbelraumboden führt, ist der Wirkungsgrad des Motor-Pumpen-Aggregates verbesserungswürdig.

Aus DE 198 26 961 A1 ist bereits ein Motor-Pumpen-Aggregat der gattungsbildenden Art bekannt, das an einem Kurbelraumboden ein Axiallagerelement aufweist, welches ausgehend von einem einen Arbeitskolben aufnehmenden Aufnahmekörper in Richtung auf einen Boden eines ein Antriebselement umgreifenden Lagerrings axial vorgespannt hervorsteht, wobei die Kontaktfläche des Axiallagerelements kleiner ist als die

Fläche der Außenseite des Bodens.

Ferner ist aus DE 197 04 752 A1 ein Motor-Pumpen-Aggregat bekannt, dessen Pumpenwelle an einem Pumpenzapfen ein Lager mit einem topfförmigen Lagerring aufweist, an dessen Boden eine auf die Stirnseite des Pumpenzapfens gerichtete Erhebung vorgesehen ist, wodurch die Betriebsposition des Lagers bezüglich der Pumpenwelle definiert ist.

Es ist eine Aufgabe der vorliegenden Erfindung, das Reibungs- und Verschleißverhalten des bekannten Motor-Pumpen-Aggregates zu verbessern.

Die Aufgabe wird für ein Motor-Pumpen-Aggregat der angegebenen Art erfindungsgemäß durch die kennzeichnenden Merkmale des Patentanspruchs 1 gelöst.

Das als Kugel ausgeführte Axiallagerelement reduziert Reibungsverluste und verbessert dadurch den Wirkungsgrad des Motor-Pumpen-Aggregates. Die Entstehung von Abrieb- und Verschleißpartikeln, welche zur Zerstörung einer elektronisch geregelten Bremsanlage führen können, wird vermieden.

In vorteilhafter Ausgestaltung der Erfindung ist das Axiallagerelement kleiner als der Kurbelraumboden ausgebildet, und lässt wenigstens einen Teil des Kurbelraumboden frei. Dadurch wird es ermöglicht, diesen freigelassenen Teil zu anderen Zwecken zu nutzen, beispielsweise um einen Kanal in den Kurbelraumboden einmünden zu lassen, welcher zur Abfuhr von Leckageflüssigkeit dienen kann.

Wenn das Axiallagerelement aus einem Lagerwerkstoff ausgebildet ist, welcher eine wesentlich größere Härte aufweist, als der Werkstoff des Aufnahmekörpers, werden Verluste zusätzlich reduziert.

Gemäß der Erfindung ist als Axiallagerelement die Kugel vorgesehen, wobei die Kugel fest an dem Aufnahmekörper angeordnet ist.

Vorzugsweise weist der Kurbelraumboden eine Bohrung auf, in der die Kugel derart befestigt ist, daß zumindest ein Teil der Kugel über den Kurbelraumboden vorsteht. Die Kugel kann in der Bohrung verpresst oder verstemmt sein.

Für eine vereinfachte Herstellung ist die Bohrung zur Aufnahme der Kugel fluchtend mit einer Achse einer Antriebswelle angeordnet. Es ist weiterhin vorteilhaft, die

Bohrung konzentrisch zu einer Bohrung des Kurbelraumes anzuordnen. Dadurch wird es ermöglicht, die Bohrungen in einem Arbeitsgang mit einem Werkzeug herzustellen, was die Anzahl der Bearbeitungsschritt und folglich die Herstellungskosten senkt.

Weitere Einzelheiten der Erfindung gehen aus der Beschreibung anhand der Zeichnung hervor. Die einzige Fig. zeigt einen Teilbereich eines Motor-Pumpen-Aggregates im Schnitt sowie in größerem Maßstab.

Ein Motor-Pumpen-Aggregat 1 umfasst einen elektrischen Motor 2, welcher an einem Aufnahmekörper 3 für hydraulisch wirksame Bauelemente wie insbesondere elektromagnetisch betätigbare Ventile, Speicherkammern, Dämpferkammern sowie die Bauelemente miteinander verbindende Kanäle befestigt ist. Eine drehbar gelagerte Antriebswelle 4 ragt mit einem Ende in einen aufnahmekörperseitigen Kurbelraum und verfügt über ein Antriebselement 7 wie einen unmittelbar angeschliffenen Exzenter oder eine aufgepresste Exzenterhülse. Das Antriebselement 7 wird unter anderem im Bereich einer Stirnseite 11 von einem Lager 8 umgriffen, welches einen Lagerring 9 aus hartem Lagerwerkstoff mit im wesentlichen topfförmigem Boden 10 aufweist. Eine Außenseite 12 des Lagerrings 9 weist in Richtung Kurbelraumboden 13.

In dem Aufnahmekörper 3 ist mindestens ein - vorzugsweise wie in der Fig. gezeigt, zwei - Arbeitskolben 14,15 translatorisch bewegbar geführt angeordnet. Die Arbeitskolben 14,15 ragen mit einem Ende 16,17 in den Kurbelraum 6 und liegen unter Zwischenordnung des Lagers 8 an dem Antriebselement 7 an. Die Arbeitskolben 14,15 werden durch die rotatorische sowie im Vergleich zu einer Achse A der Antriebswelle 4 exzentrische Drehbewegung des Antriebselementes 7 angetrieben. Dadurch wird ein inkompressibles Medium, insbesondere Bremsflüssigkeit, aus einem nicht gezeichneten Arbeitsraum verdrängt. Eine Rückstellbewegung jedes Arbeitskolben 14,15 in Richtung Antriebselement 7 wird durch nicht dargestellte Rückstellfedern oder durch einen nicht dargestellten Koppelring bewirkt, der sich in dem Kurbelraum 6 befindet, und beide Kolben 14,15 elastisch in Richtung Antriebselement 7 andrückt. Es versteht sich, daß jedem Arbeitsraum wenigstens ein nicht gezeichnetes Einlaßventil und wenigstens ein nicht gezeichnetes Auslaßventil zugeordnet ist, die sich in einem Druckhub oder in einem Saughub wechselweise in einer Öffnungsstellung oder in einer Schließstellung befinden.

Der Kurbelraumboden 13 verfügt über ein Axiallagerelement 18, das ausgehend von dem Aufnahmekörper 3 in Richtung Boden 10 des Lagerrings 9 vorsteht und eine Kontaktfläche aufweist, deren Flächeninhalt geringer ist, als der Flächeninhalt der Außenseite 12. Die gebildete Kontaktfläche ist idealerweise punktförmig, um Reibungsvorgänge zwischen Lagerring und Kurbelraumboden zu minimieren.

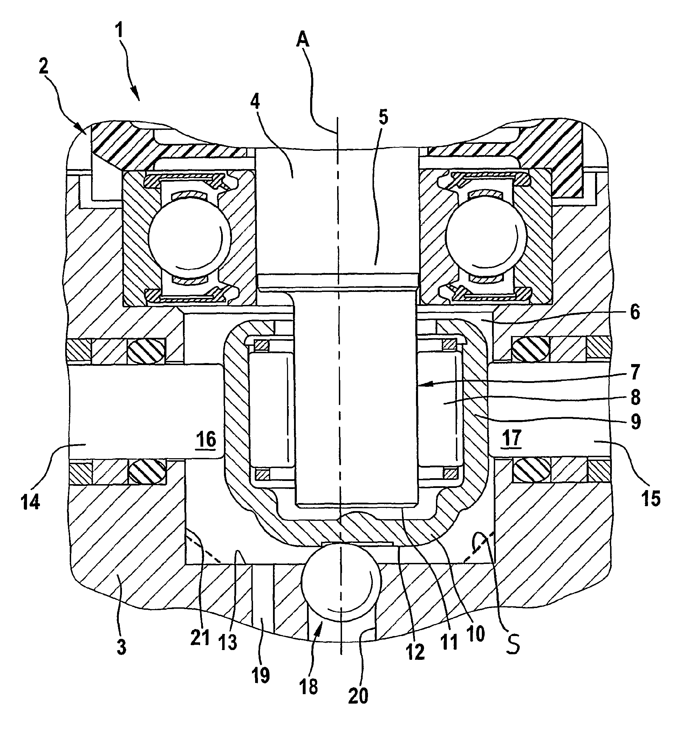

Nach der Fig. ist die Ausdehnung des Axiallagerelementes 18 - in Radialrichtung bezogen auf die Achse A der Antriebswelle 4 - kleiner als der Kurbelraumboden 13, so daß wenigstens ein Teil des Kurbelraumboden 13 freigelassen ist. Dieser Teil wird nicht von dem Axiallagerelement 18 überdeckt, so daß es möglich ist, hier einen hydraulischen Kanal 19 in den Kurbelraum 6 einmünden zu lassen, welcher der Abfuhr von Leckageflüssigkeit dient. Bei dem Kanal 19 handelt es sich beispielsweise um eine Bohrung, die die Leckageflüssigkeit beispielsweise mit Hilfe eines Rückschlagventils in die Umgebung oder in ein Reservoir ableitet. Das Reservoir kann sich grundsätzlich innerhalb des Aufnahmekörpers oder in einem Gehäuse für einen nicht dargestellten elektronischen Regler befinden, welcher auf einer, dem elektrischen Motor 2 abgewandten Seite des Aufnahmekörpers 3 angeordnet ist. Durch die Erfindung wird es mit einfachen Mitteln ermöglicht, eine Verkleinerung des Bauraumbedarfes für den Kurbelraum 6 vorzusehen, indem - wie in Fig. 1 gestrichelt gezeigt - der Kurbelraumboden 13 mittels Schrägen S in die Kurbelraumwandung übergeht.

Das Axiallagerelement 18 ist aus einem Lagerwerkstoff ausgebildet, welcher im Vergleich mit dem Werkstoff des Aufnahmekörpers 3 eine wesentlich größere Härte aufweist. Die Härte von dem Lagerring 9 und von dem Axiallagerelement 18 stimmt im wesentlichen überein, so daß im wesentlichen gleich verteilter Verschleiß stattfindet.

Wie die Fig. zeigt, ist das Axiallagerelement 18 als Kugel ausgebildet, welche fest an dem Aufnahmekörper 3 angeordnet ist. Bei einer anderen Ausführungsform, welche nicht aus der Fig. hervorgeht, verfügt das Axiallagerelement über eine im wesentlichen flache Grundscheibe, die auf dem Kurbelraumboden aufliegt. Mittig auf der Scheibe ist die Kontaktfläche für den Boden des Lagers vorgesehen. Dabei kann es sich um eine aufgeschweißte, gewissermaßen punktförmige Warze oder einfach um einen spanlos mittels Umformung hergestellten Vorsprung handeln, welcher in Richtung Boden weist. Damit ein Teil des Kurbelraumboden freigelassen wird, verfügt die Scheibe über wenigstens einen Durchbruch oder Ausschnitt, welcher mit einem Kanal für die Ableitung von Leckageflüssigkeit fluchtet.

Fluchtend mit der Achse A der Antriebswelle 4 ist in dem Kurbelraumboden 13 eine Bohrung 20 vorgesehen, in der die Kugel derart befestigt ist, daß ein Teil der Kugel über den Kurbelraumboden 13 vorsteht. Die Kugel ist in der Bohrung 20 verpresst oder verstemmt. Wenn der Durchmesser der Kugel zumindest geringfügig größer ausgebildet ist, als der Durchmesser der Bohrung 20 tritt mit dem Aufpressen der Kugel gleichzeitig eine befestigende, örtlich begrenzte, plastische Verformung des Aufnahmekörpers 3 ein. Die Bohrung 20 ist konzentrisch zu einer Bohrung 21 des Kurbelraumes 6 angeordnet, so daß beide Bohrungen 20,21 in einem Arbeitsgang mit einem Werkzeug herstellbar sind.

Bei Antriebsdrehbewegung der Antriebswelle 4 beschreibt der Boden 10 des Lagerringes 9 in Relation zu einer festen Berührungsstelle an der Kugel eine exzentrische Kreisbahn.

Die Erfindung erlaubt die Verwendung eines vergleichsweise weichen, kostengünstigen Leichtwerkstoffes wie insbesondere Leichtmetall oder Kunststoff zur Herstellung des Aufnahmekörpers 3 bei geringem Aufwand für den Verschleißschutz. Selbst wenn das Motor-Pumpen-Aggregat über erhöhte Motoreinschaltzeiten verfügt, um Funktionen wie beispielsweise ESP, ASR, OHB, Hill-Holder oder Abstandsregelung erfüllen zu können, genügt für den Aufnahmekörper 3 ein Aluminiumwerkstoff, ohne eine elektrolytische Oxidation vorsehen zu müssen.

### Bezugszeichenliste

- 1: Motor-Pumpen-Aggregat
- 2: Motor
- 3: Aufnahmekörper
- 4: Antriebswelle
- 5: Ende
- 6: Kurbelraum
- 7: Antriebselement
- 8: Lager
- 9: Lagerring
- 10: Boden
- 11: Stirnseite
- 12: Außenseite
- 13: Kurbelraumboden
- 14: Arbeitskolben
- 15: Arbeitskolben
- 16: Ende
- 17: Ende
- 18: Axiallagerelement
- 19: Kanal
- 20: Bohrung
- 21: Bohrung

## Patentansprüche

1. Motor-Pumpen-Aggregat, insbesondere für schlupfgeregelte Fahrzeugbremssysteme, mit einem Aufnahmekörper (3) für hydraulisch wirksame Bauelemente umfassend mindestens einen Arbeitskolben (14,15), welcher in dem Aufnahmekörper (3) translatorisch bewegbar geführt angeordnet ist, und mit einem Ende (16,17) in einen Kurbelraum (6) für ein rotatorisch bewegbares Antriebselement (7) ragt, welches von einem Lager (8) umgriffen wird, das einen Lagerring (9) mit im wesentlichen topfförmigen Boden (10) aufweist, und eine Stirnseite (11) des Antriebselementes (7) übergreift, und wobei der Boden (10) mit einer Außenseite (12) an einen Kurbelraumboden (13) anlegbar ist, wobei der Kurbelraumboden (13) ein Axiallagerelement (18) für den Boden (10) aufweist, welches ausgehend von dem Aufnahmekörper (3) in Richtung Boden (10) vorsteht und eine Kontaktfläche aufweist, deren Flächeninhalt geringer ist, als der Flächeninhalt der Außenseite (12), **dadurch gekennzeichnet, daß** als Axiallagerelement (18) eine Kugel vorgesehen ist, und daß die Kugel fest an dem Aufnahmekörper (3) angeordnet ist.

2. Motor-Pumpen-Aggregat nach Anspruch 1, **dadurch gekennzeichnet, daß** das Axiallagerelement (18) kleiner als der Kurbelraumboden (13) ausgebildet ist, und wenigstens einen Teil des Kurbelraumboden (13) freiläßt.

3. Motor-Pumpen-Aggregat nach Anspruch 1 oder 2, **dadurch gekennzeichnet, daß** das Axiallagerelement (18) aus einem Lagerwerkstoff ausgebildet ist, welcher eine wesentlich größere Härte aufweist, als der Werkstoff des Aufnahmekörpers (3).

4. Motor-Pumpen-Aggregat nach Anspruch 3, **dadurch gekennzeichnet, daß** der Lagerring (9) aus einem harten Lagerwerkstoff ausgebildet ist, welcher etwa die Härte von dem Lagerwerkstoff des Axiallagerelementes (18) aufweist.

5. Motor-Pumpen-Aggregat nach Anspruch 1, **dadurch gekennzeichnet, daß** der Kurbelraumboden (13) eine Bohrung (20) aufweist, in der die Kugel derart befestigt ist, daß zumindest ein Teil der Kugel über den Kurbelraumboden (13) vorsteht.

6. Motor-Pumpen-Aggregat nach Anspruch 5, **dadurch gekennzeichnet, daß** die Kugel in der Bohrung (20) verpresst oder verstemmt ist.

7. Motor-Pumpen-Aggregat nach Anspruch 5, **dadurch gekennzeichnet, daß** die Kugel einen zumindest geringfügig größeren Durchmesser aufweist, als die Bohrung (20).

8. Motor-Pumpen-Aggregat nach Anspruch 5 oder 6, **dadurch gekennzeichnet, daß** die Bohrung (20) fluchtend mit einer Achse (A) einer Antriebswelle (4) angeordnet ist.

9. Motor-Pumpen-Aggregat nach Anspruch 8, **dadurch gekennzeichnet, daß** die Bohrung (20) konzentrisch zu einer Bohrung (21) des Kurbelraums (6) angeordnet ist.

10. Motor-Pumpen-Aggregat nach Anspruch 1, **dadurch gekennzeichnet, daß** der Lagerring (9) mit dem Boden (10) einen Exzenter umgreift, so daß der Boden (10) infolge einer Antriebsdrehbewegung in Relation zu der festen Kontaktfläche an der Kugel eine exzentrische Kreisbahn beschreibt.

11. Motor-Pumpen-Aggregat nach Anspruch 2, **dadurch gekennzeichnet, daß** in den freigelassenen Teil des Kurbelraumboden (13) ein Kanal (19) einmündet, welcher zur Ableitung von Leckageflüssigkeit dient.

## Claims

1. Motor/pump assembly, in particular for anti-lock vehicle brake systems, having a receiving body (3) for hydraulically active components comprising at least one working piston (14, 15) which is arranged in a guided manner such that it can be moved translatorily in the receiving body (3) and protrudes with one end (16, 17) into a crankcase (6) for a rotationally movable drive element (7) which is engaged around by a bearing (8) which has a bearing ring (9) with a substantially cup-shaped bottom (10), and engages over an end side (11) of the drive element (7), and it being possible for the bottom (10) to be placed with an outer side (12) onto a crankcase bottom (13), the crankcase bottom (13) having an axial bearing element (18) for the bottom (10), which axial bearing element (18), starting from the receiving body (3), projects in the direction of the bottom (10) and has a contact face, the surface area of which is smaller than the surface area of the outer side (12), **characterized in that** a ball is provided as axial bearing element (18), and **in that** the ball is arranged fixedly on the receiving body (3).

2. Motor/pump assembly according to Claim 1, **characterized in that** the axial bearing element (18) is configured to be smaller than the crankcase bottom (13), and leaves at least part of the crankcase bottom (13) free.

3. Motor/pump assembly according to Claim 1 or 2, **characterized in that** the axial bearing element (18) is formed from a bearing material which has a substantially greater strength than the material of the receiving body (3).

4. Motor/pump assembly according to Claim 3, **characterized in that** the bearing ring (9) is formed from a hard bearing material which has approximately the hardness of the bearing material of the axial bearing element (18).

5. Motor/pump assembly according to Claim 1, **characterized in that** the crankcase bottom (13) has a hole (20), in which the ball is fastened in such a way that at least part of the ball projects beyond the crankcase bottom (13).

6. Motor/pump assembly according to Claim 5, **characterized in that** the ball is pressed or caulked in the hole (20).

7. Motor/pump assembly according to Claim 5, **characterized in that** the ball has an at least slightly greater diameter than the hole (20).

8. Motor/pump assembly according to Claim 5 or 6, **characterized in that** the hole (20) is arranged flush with an axis (A) of a drive shaft (4).

9. Motor/pump assembly according to Claim 8, **characterized in that** the hole (20) is arranged concentrically with respect to a hole (21) of the crankcase (6).

10. Motor/pump assembly according to Claim 1, **characterized in that** the bottom (10) of the bearing ring (9) engages around an eccentric, with the result that the bottom (10) describes an eccentric circular path in relation to the fixed contact face on the ball as a consequence of a drive rotational movement.

11. Motor/pump assembly according to Claim 2, **characterized in that** a channel (19) which serves to discharge leakage fluid opens into the exposed part of the crankcase bottom (13).

## Revendications

1. Groupe motopompe, en particulier pour systèmes de freinage de véhicules à régulation antipatinage, comprenant un corps de réception (3) pour des composants à action hydraulique, comprenant au moins un piston de travail (14, 15) qui est disposé de manière guidée en translation dans le corps de réception (3), et comprenant une extrémité (16, 17) dans un espace de vilebrequin (6) pour un élément d'entraînement (7) déplaçable en rotation qui est saisi sur sa circonférence par un palier (8) qui présente une bague de palier (9) avec un fond (10) sensiblement en forme de pot, et qui vient en prise par le dessus avec un côté frontal (11) de l'élément d'entraînement (7), le fond (10) pouvant s'appliquer avec un côté extérieur (12) sur un fond d'espace de vilebrequin (13), le fond d'espace de vilebrequin (13) présentant un élément de palier axial (18) pour le fond (10), qui fait saillie dans la direction du fond (10) depuis le corps de réception (3) et qui présente une surface de contact, dont la superficie est inférieure à la superficie du côté extérieur (12), **caractérisé en ce que** l'élément de palier axial (18) est une bille et **en ce que** la bille est disposée fixement sur le corps de réception (3).

2. Groupe motopompe selon la revendication 1, **caractérisé en ce que** l'élément de palier axial (18) est plus petit que le fond de l'espace de vilebrequin (13), et laisse libre au moins une partie du fond de l'espace de vilebrequin (13).

3. Groupe motopompe selon la revendication 1 ou 2, **caractérisé en ce que** l'élément de palier axial (18) se compose d'un matériau de palier qui présente une dureté nettement supérieure à celle du matériau du corps de réception (3).

4. Groupe motopompe selon la revendication 3, **caractérisé en ce que** la bague de palier (9) est réalisée en un matériau de palier dur, qui présente approximativement la dureté du matériau de palier de l'élément de palier axial (18).

5. Groupe motopompe selon la revendication 1, **caractérisé en ce que** le fond de l'espace de vilebrequin (13) présente un alésage (20) dans lequel est fixée la bille de telle sorte qu'au moins une partie de la bille dépasse au-dessus du fond de l'espace de vilebrequin (13).

6. Groupe motopompe selon la revendication 5, **caractérisé en ce que** la bille est pressée ou matée dans l'alésage (20).

7. Groupe motopompe selon la revendication 5, **caractérisé en ce que** la bille présente un diamètre au moins légèrement plus grand que l'alésage (20).

8. Groupe motopompe selon la revendication 5 ou 6, **caractérisé en ce que** l'alésage (20) est disposé en affleurement avec un axe (A) d'un arbre d'entraînement (4).

9. Groupe motopompe selon la revendication 8, **caractérisé en ce que** l'alésage (20) est disposé concentriquement à un alésage (21) de l'espace de vilebrequin (6).

10. Groupe motopompe selon la revendication 1, **caractérisé en ce que** la bague de palier (9) vient en prise avec le fond (10) autour d'un excentrique de telle sorte que le fond (10), du fait d'un mouvement de rotation d'entraînement par rapport à la surface de contact fixe sur la bille décrive une piste circulaire excentrique.

11. Groupe motopompe selon la revendication 2, **caractérisé en ce que** dans la partie laissée libre du fond de l'espace de vilebrequin (13) débouche un canal (19) qui sert à dévier le liquide de fuite.
